# EUROPEAN PATENT APPLICATION

(11) **EP 3 398 764 A1**
(43) Date of publication of application: **07.11.2018**
(21) Application number: 17382243.8
(22) Date of filing: 03.05.2017
(51) Int. Cl.: B31B 70/14, B23K 26/046, B23K 26/08, B31B 50/14

(54) **CUTTING MODULE FOR PACKAGING MACHINE FOR SACHET-TYPE PACKAGES MADE FROM FLEXIBLE FILM**

(71) Applicant: Macsa ID, S.A., 08272 Sant Fruitos de Bages (Barcelona) (ES)
(72) Inventor: VOGLER, Sven Alexander, 08272 Sant Fruitos de Bages (Barcelona) (ES); CAMPS CLARAMUNT, Joan, 08242 Manresa (Barcelona) (ES); MARQUEZ PEREZ, Victor, 08221 Terrassa (Barcelona) (ES)
(74) Representative: Durán-Corretjer, S.L.P.

(57) **Abstract**

Cutting module for packaging machine for sachet-type packages made from flexible film, comprising a shaping module that cuts out the package leaving a free zone for subsequent filling and sealing of the sachet, comprising a laser cutting module for making the aforementioned cut, said laser cutting module comprising a laser generator and an optical module that comprises a submodule for modifying the focal length of the laser, comprising in turn a fixed lens and a movable lens and, in series with said submodule, a head for modifying the exit angle of the laser.

## Description

The present invention relates to a packaging machine and to a package cutting module. In particular, the present invention relates to a cutting-shaping module for "sachet"-type packages made from film (also known as flexible film). This type of package is also known as a "bag". In general, these packages are formed from at least two strips of film welded or stuck together.

The shaping module usually forms part of a packaging machine. Normally, the packaging machine extends linearly (usually horizontally, vertically or planarly, although other arrangements are also possible) with a main processing axis, and it is supplied - from reel(s) at one end - with flexible film, usually pre-printed, and the sachet is normally shaped first by means of pre-shaping by heat welding and then shaping by cutting, and it is then filled and sealed. During shaping by cutting, an open zone is usually left, allowing access into the sachet to allow filling. In the most usual case of a rectangular sachet, it is common to leave the upper end of the sachet open. The sides to be sealed after cutting can be sealed by welding and/or using adhesive, the open zone being sealed after filling.

During shaping, it is necessary to cut the outline of the sachet. Sachets of a shape other than rectangular are known as "free shape" sachets. Said shape must be cut out in order to separate the sachet from the at least two strips of film that form it. According to the known art, this is done using blades, dies, or matrices shaped appropriately. Each shape to be cut out therefore requires a specific blade to be produced. To change the package shape, it is necessary to uninstall the blade and install and test the fit of the new one, which is time-consuming. What is more, the blade suffers wear and requires intensive maintenance.

It is an object of the present invention to disclose means that provide a solution to the problems set out above, particularly by disclosing a cutting module for a packaging machine that offers faster changing between different shapes of sachet-type packages.

The present invention discloses the use of a laser module with a laser generator and subsequent optical processing to make the above-mentioned cut.

In particular, the present invention discloses a cutting module for a packaging machine for sachet-type packages made from flexible film, comprising a shaping module that cuts out the package leaving a free zone for subsequent filling and sealing of the sachet, in which said cutting module comprises a laser cutting module for making the aforementioned cut, said laser cutting module comprising a laser generator and an optical module that comprises a submodule for modifying the focal length of the laser, comprising in turn a fixed lens and a movable lens and, in series with said submodule, a head for modifying the exit angle of the laser.

In combination with the optical submodule for modifying the focal length, and the head, the laser generator allows accurate cuts to be made following paths over the plane surface of the film. Said paths can be modified immediately with an electronic or computerised controller, via software. Modifying the focal length makes it possible to ensure that the correct energy intensity is applied to make the cut in the material of the film without producing a weld. Furthermore, it allows the cutting energy of the laser to be adjusted, without the need for changes to the laser generator.

Preferably, the aforementioned optical module is positioned perpendicular to the direction of movement of the packages within the machine. This ensures the least possible interference with the rest of the machine.

The laser generator can advantageously be positioned perpendicular to the optical module. An elbow can be positioned between the exit from the laser generator and the entry to the optical module. This allows the laser generator to be positioned parallel to the direction of movement of the packages, also known as the main processing axis. When the laser generator is in the parallel position, the generator module can advantageously be positioned over the packaging machine, so as not to prevent access to any component of the machine. It would also be possible to position it underneath.

Depending on the type of material of the film and the substance to be packaged in the sachet, the possibility of laser-generated burns must be taken into account.

For this, the present invention provides for the cutting-shaping module to have a gas flow generator for generating a flow of gas adjacent to the surface of the package. Said flow has three functions. A first function is to extinguish any flames that might be generated by the laser, preventing the formation of solid particles. The second function is to drive away the particles and gases generated, to prevent them from entering the package during the subsequent packaging phase. A third function is to cool the material, preventing subsequent welding of the cut areas.

The flow generator can comprise one, two or more blowers. The blowers can be air blowers, but can also be blowers of an inert gas such as nitrogen or a noble gas.

The flow generator will preferably have the ability to move, more preferably the ability to change orientation. In preferred embodiments, this advantageously makes it possible to have means for controlling the position of the generator so that the gas flow is also parallel to the cut. For example, at least one blower can have a translation and/or rotation capability.

The present invention also provides for the cutting module to have a cutting fume extractor. Preferably, said extractor will be positioned above the laser cutting station.

In addition, the present invention also comprises the provision of a means for opening the sachet by a cutting line generated by the laser cutting module. Said means can, for example, be an arm positioned so as to pass from an inner zone of the package to an outer zone through the cut zone. The present invention provides for said opening means to be positioned in the laser cutting station. This has the advantage of preventing any welding of hot zones after laser cutting.

Preferably, said opening means and the above-mentioned air flow generator will act in a coordinated manner to prevent any residual products of cutting from entering the sachet. The coordination can take place in different ways. For example, the opening means can be activated after the air flow generator means is actuated. They can also be coordinated by arranging the direction of the air flow and the opening caused by the opening means in such a way that when the package is opened, the package wall lifts up so as to block the air flow, among other coordination methods.

Preferably, the cutting module will comprise an extractor for the fumes produced by the laser cutting, which can, preferably, be positioned above the station where the laser cutting takes place.

Preferably, the cutting module is a shaping module that cuts out at least part of the profile of the package. The cut passes through the whole thickness of the film.

The present invention also discloses a packaging machine for sachet-type packages comprising said cutting module.

The packaging machine and/or the shaping module can be supplemented with the corresponding control module, which can also comprise a user interface device for making corresponding programming changes, such as changes to the shape of the sachet, or changes in the energy intensity applied when the package material is changed. The main function of the control module is to make the cuts shaping the outline of the sachet-type package, for which purpose it will contain and/or generate the appropriate commands.

As will be understood, the present invention also comprises the use of a laser generator and an optical module comprising a submodule for modifying the focal length of the laser, comprising in turn a fixed lens and a movable lens and, in series with said submodule, a head for modifying the exit angle of the laser so as to make a cut that defines the profile of a sachet-type package made from flexible film, the cut leaving a sufficient free zone for subsequent filling of the package.

For a better understanding, some drawings of an embodiment of a packaging machine that is the subject matter of the present invention are attached by way of explanatory but not restrictive example.
Fig. 1 is an elevation view of a packaging machine according to the present invention, more specifically of its cutting-shaping module.
Fig. 2 is a perspective view of the laser cutting module of the example in Fig. 1.
Fig. 3 is a perspective view, from another point of view, of the cutting module.
Fig. 4 is an exploded view of the module shown in Fig. 2 and 3.
Fig. 5 shows diagrammatically the optical module and its function.
Fig. 6 is a diagram showing the processes for generating an air flow, extracting fumes and opening the cut generated.
Fig. 7 shows the final result after filling and sealing the sachet.
Fig. 8 shows another sachet, with a different shape, after the cut is made and before filling and sealing.

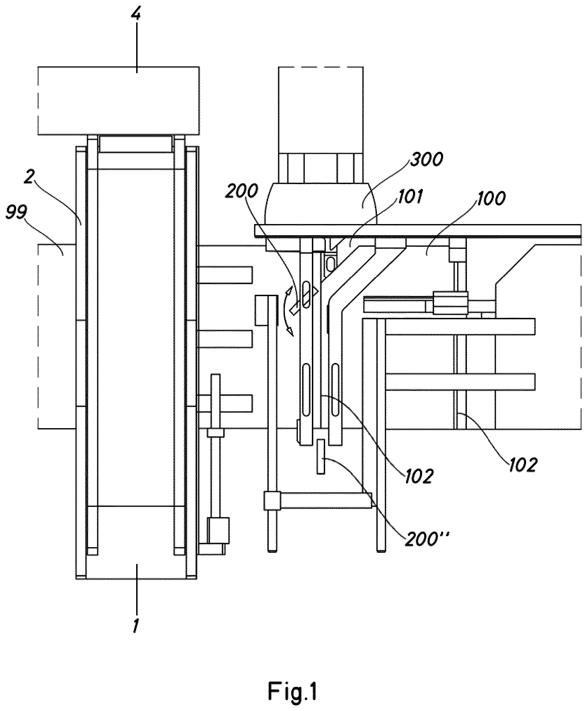

Fig. 1 shows a cutting module of a packaging machine for sachet-type packages, formed from a film of flexible material. Specifically, it shows the shaping module, in which at least part of the outer profile of the sachet to be filled and sealed is cut out. The previous modules, such as the reel or reels of film -99-, the side- and lower-wall welding module using heat welding, as well as the subsequent modules - filling and sealing - have not been shown, since they can be of a known type.

Fig. 1 shows the laser cutting module, which comprises a laser generator -4- located above the machine and parallel to the direction of movement of the sachets -100-. Thus, the generator does not interfere with access to the numerous mechanical parts of the machine (hooks, clamps, conveyors, blowers -200-, -200'-, extractor -300-, etc.

The laser cutting module in the example makes the cuts -101- and -102-. In the example shown, the cut -102- is made on a previously welded zone, but the cut -101- is made on an unwelded zone, which remains open for subsequent filling of the sachet -100-.

In the embodiment shown, after cutting, the sachet -100- is conveyed to a zone in which, simultaneously, fumes are absorbed, air is blown and the sachet -100- is opened. Naturally, it is entirely possible that these phases take place in the same physical location in which laser cutting is performed.

In the embodiment shown, the means for generating a flow parallel and adjacent to the cuts comprise two blowers -200-, -200'-. Furthermore, a fume extractor -300- is located above, the function of which is to extract products generated during cutting, preventing them from entering the sachet before its final sealing in the packaging machine.

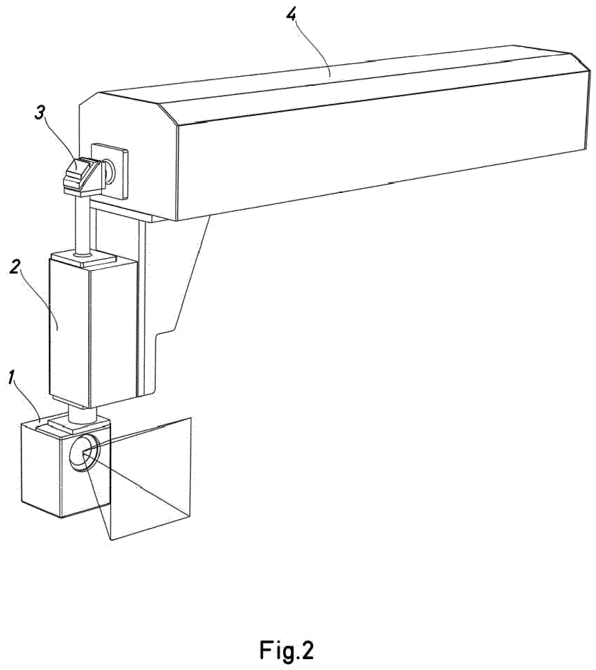

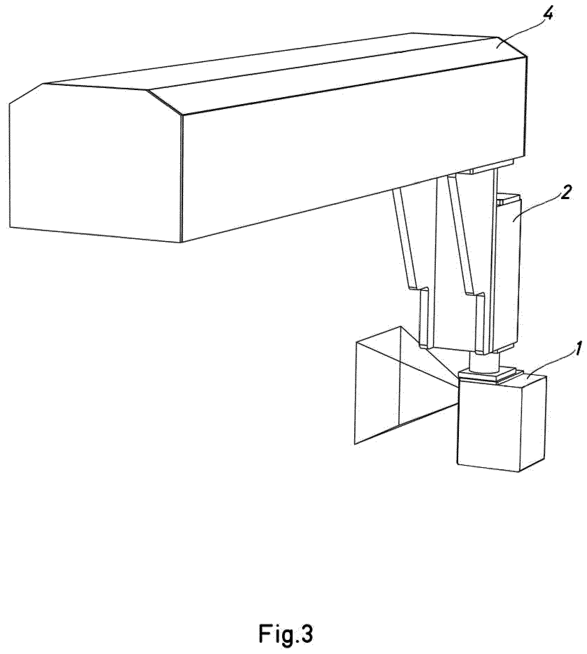

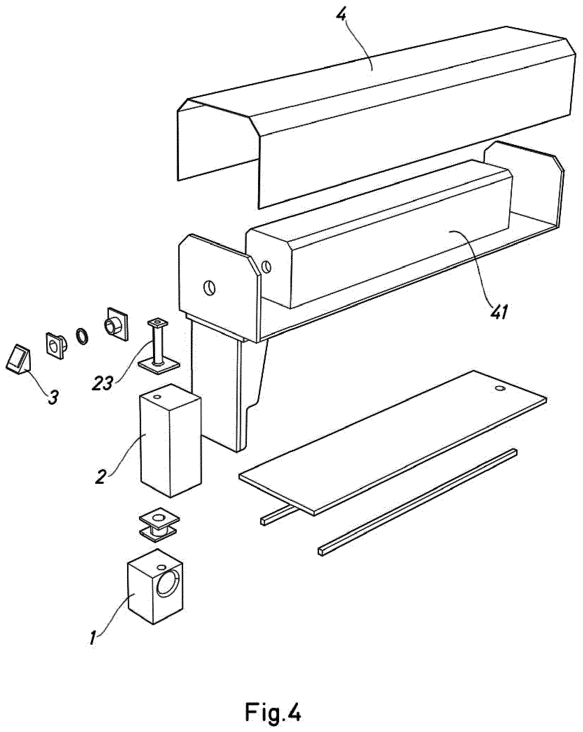

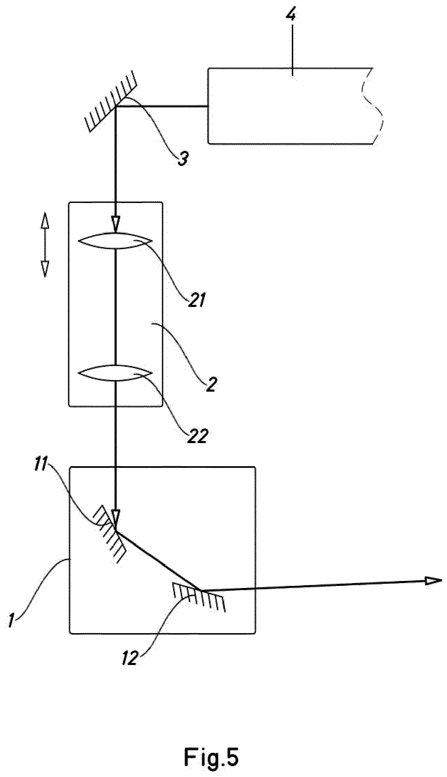

Fig. 2 to 5 show an exemplary embodiment of the laser cutting module, composed of a laser generator -4-, which can be standard, containing within it the elements -41- required for generating the laser, which is then diverted and processed in the optical module.

The optical module is located at the exit from the laser generator -4- and, in the example shown, starts with an optical elbow -3- that diverts the laser beam and takes it to a submodule -2- for modifying the focal length. Said modifying submodule -2- comprises a movable lens -21- and a fixed lens -22-. The movable lens -21- can move in the direction of the beam. For better control, the controller breaks down the movement of the movable lens into two: a first movement corresponding to setting the required focal length relative to a reference point of the cutting area (for example, the central point of the area, or the point corresponding to a zero angle of deviation in the output of the laser at the end of the optical module), and a further displacement corresponding to setting the variation of focal length relative to that of the reference point of each point on the cutting area.

After the modifying submodule -2-, a laser head -1- is located in series, which can be of a known type and which allows the output laser beam to be at the angle required to reach the desired cutting point at any time. This can be done by means of two galvanometers -11-, -12-, each of which provides a rotation about two different axes.

An electronic or computerised controller can produce the transformation of the cartesian coordinates (x, y, z) of the desired cutting point to the necessary values of focal length and galvanometer angles. This ensures that the power and/or the surface power density at each cutting point are optimal for making the cut while minimising unwanted effects.

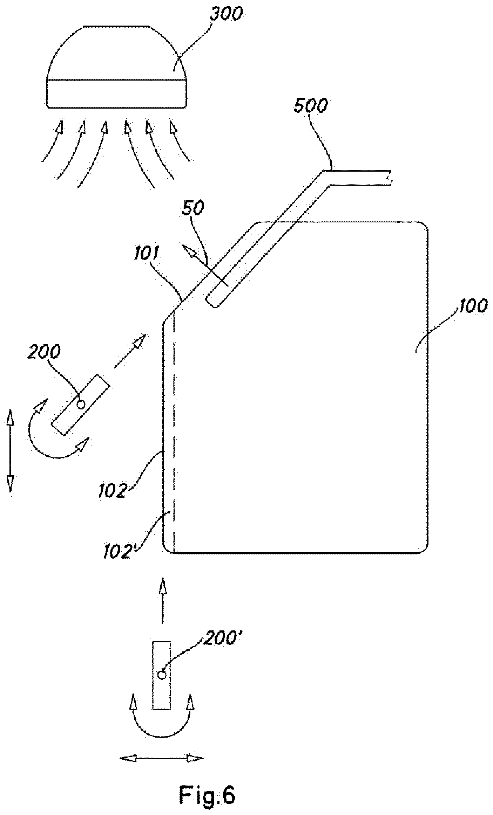

Fig. 6 shows diagrammatically the production of a gas blanket for cooling/cleaning the cuts made, a first opening of the sachet -100- to prevent spontaneous welding of material, and fume extraction.

In the sachet -100- shown in Fig. 6, two cuts made by laser have been illustrated. A first cut -102- is located in a zone -102'- that had been welded or stuck earlier, and therefore there is no danger of sub-products from cutting (particles, gases) entering the sachet -100- through the cut. Even so, a blower - 200'- has been positioned for generating a cooling air curtain. The blower -200'- in the example has a translation and rotation capability with the aim of aligning the air flow as far as possible with the cutting path -102-.

The second cut -101- represents an entry point into the sachet -100-. Similarly, there is a blower -200-with a translation and rotation capability with the aim, as far as possible, of generating a gas current following the cutting direction at each point.

The blowers of the invention could be non-translatable and/or non-orientable. The gas blown can be air, nitrogen or another inert gas, such as a noble gas.

The energy intensity or power intensity for producing the cut depends on the individual type of material to be cut.

In addition, a mechanism -500- for opening the sachet can be seen, consisting of an arm which passes through the cut -101- outwards from inside the sachet -100-, in this case following a direction -50- perpendicular to the cut. The opening mechanism -500- and the functioning of the blower -200- must be coordinated by a controller to prevent, for example, the sachet from opening before the blower is actuated in such a way that the blower propels particles and/or gases into the sachet.

Above this a fume extractor -300- has been positioned with the aim of removing any gases and particles that are generated. The extractor could also be located in a different position.

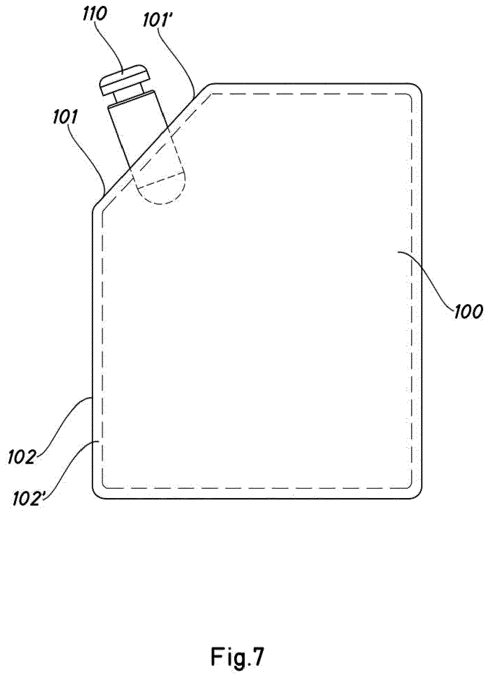

Next, and referring to Fig. 7, the packaging machine performs the filling, as appropriate placing a plug -110- and creating a weld bead -101'- for the final sealing of the sachet -100-.

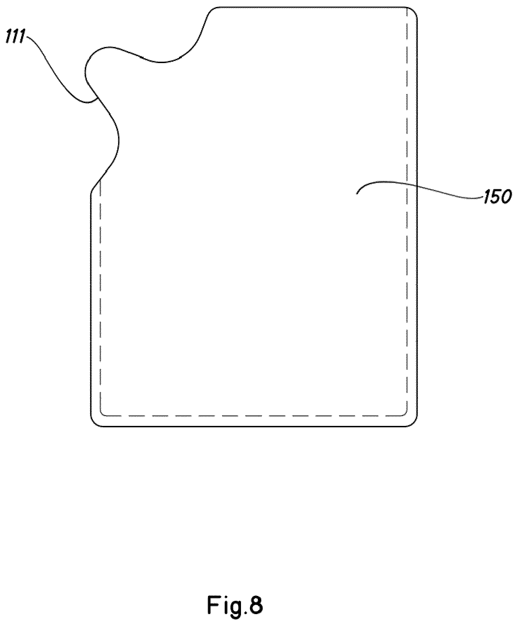

The present invention is not restricted to straight cuts, and other types of cuts can be made, such as the cut -111- on the sachet -150- shown in Fig. 8.

The example shown corresponds to a horizontal packaging machine, but the invention is not restricted to this arrangement, and is also applicable to other arrangements, such as a vertical arrangement.

Although the invention has been presented and described with reference to embodiments thereof, it should be understood that these are not restrictive of the invention, and therefore multiple structural or other details may vary, as may be obvious to experts in the sector after interpreting the subject matter disclosed in the present description, claims and drawings. Therefore, all variants and equivalents will be included within the scope of the present invention if they can be considered to fall within the broadest scope of the following claims.

## Claims

1. Cutting module for packaging machine for sachet-type packages made from flexible film, comprising a shaping module that cuts out the package leaving a free zone for subsequent filling and sealing of the sachet, **characterised in that** it comprises a laser cutting module for making the aforementioned cut, said laser cutting module comprising a laser generator and an optical module that comprises a submodule for modifying the focal length of the laser, comprising in turn a fixed lens and a movable lens and, in series with said submodule, a head for modifying the exit angle of the laser.

2. Module according to claim 1, wherein the aforementioned optical module is positioned perpendicular to the direction of movement of the packages within the machine.

3. Module according to either claim 1 or claim 2, wherein the aforementioned laser generator is positioned parallel to the direction of movement of the packages within the machine.

4. Module according to claim 2, wherein the laser generator is positioned over the packaging machine.

5. Module according to any one of the previous claims, wherein an elbow is positioned between the exit from the laser generator and the entry to the optical module.

6. Module according to claim 5, wherein the laser generator and the optical module are positioned perpendicular to each other.

7. Module according to any one of the previous claims, wherein the shaping module has a gas flow generator for generating a flow adjacent to the surface of the package.

8. Module according to the previous claim, wherein the gas flow generator comprises at least one blower.

9. Module according to the previous claim, wherein the gas flow generator comprises two blowers.

10. Module according to any one of claims 7 to 9, wherein the aforementioned gas is air, or an inert gas.

11. Module according to any one of claims 7 to 10, wherein the flow generator has movement capability.

12. Module according to claim 11, wherein the flow generator has means for varying the orientation of the flow generated.

13. Module according to any one of the previous claims, wherein the shaping module comprises a mechanism for opening the package by a cutting line generated by the laser cutting module.

14. Module according to the previous claim, wherein the opening mechanism comprises an arm positioned so as to pass from the inner zone of the package to an outer zone through the cut zone.

15. Module according to any one of claims 7 to 11 in combination with claim 13 or 14, wherein said opening mechanism and said flow generator act in a coordinated manner.

16. Module according to any one of the previous claims, wherein said shaping module comprises an extractor for the fumes produced by the laser cutting.

17. Module according to the previous claim, wherein said fume extractor is positioned above the station where the laser cutting takes place.

18. Packaging machine for sachet-type packages made from flexible film, **characterised in that** it comprises a cutting module according to any one of the previous claims.

19. Use of a laser generator and an optical module comprising a submodule for modifying the focal length of the laser, comprising in turn a fixed lens and a movable lens and, in series therewith, a head for modifying the exit angle of the laser so as to make a cut that defines the profile of a sachet-type package made from flexible film, the cut leaving a sufficient free zone for subsequent filling of the package.

## Amended claims

### Amended claims in accordance with Rule 137(2) EPC.

1. Cutting module for packaging machine for sachet-type packages made from flexible film, comprising a shaping module that cuts out the package leaving a free zone for subsequent filling and sealing of the sachet, a laser cutting module for making the aforementioned cut, said laser cutting module comprising a laser generator and an optical module that comprises a submodule for modifying the focal length of the laser, and, in series with said submodule, a head for modifying the exit angle of the laser, **characterised in that** said submodule comprises a fixed lens and a movable lens.

2. Module according to claim 1, wherein the shaping module has a gas flow generator for generating a flow adjacent to the surface of the package.

3. Module according to the previous claim, wherein the gas flow generator comprises at least one blower.

4. Module according to the previous claim, wherein the gas flow generator comprises two blowers.

5. Module according to any one of claims 2 to 4, wherein the aforementioned gas is air, or an inert gas.

6. Module according to any one of claims 2 to 5, wherein the flow generator has movement capability.

7. Module according to claim 6, wherein the flow generator has means for varying the orientation of the flow generated.

8. Module according to any one of the previous claims, wherein the shaping module comprises a mechanism for opening the package by a cutting line generated by the laser cutting module.

9. Module according to the previous claim, wherein the opening mechanism comprises an arm positioned so as to pass from the inner zone of the package to an outer zone through the cut zone.

10. Module according to any one of claims 2 to 6 in combination with claim 8 or 9, wherein said opening mechanism and said flow generator act in a coordinated manner.

11. Module according to any one of the previous claims, wherein said shaping module comprises an extractor for the fumes produced by the laser cutting.

12. Module according to the previous claim, wherein said fume extractor is positioned above the station where the laser cutting takes place.

13. Packaging machine for sachet-type packages made from flexible film, **characterised in that** it comprises a cutting module according to any one of the previous claims.

14. Packaging machine according to claim 13, wherein the optical module is positioned perpendicular to the direction of movement of the packages within the machine.

15. Packaging machine according to either claim 13 or claim 14, wherein the laser generator is positioned parallel to the direction of movement of the packages within the machine.

16. Packaging machine according to claim 14, wherein the laser generator is positioned over the packaging machine.

17. Packaging machine according to any one of claims 13 to 16, wherein an elbow is positioned between the exit from the laser generator and the entry to the optical module.

18. Packaging machine according to claim 17, wherein the laser generator and the optical module are positioned perpendicular to each other.

19. Use of a laser generator and an optical module comprising a submodule for modifying the focal length of the laser, comprising in turn a fixed lens and a movable lens and, in series therewith, a head for modifying the exit angle of the laser so as to make a cut that defines the profile of a sachet-type package made from flexible film, the cut leaving a sufficient free zone for subsequent filling of the package.
